# FASCICULE DE BREVET EUROPEEN

(11) **EP 3 174 743 B1**
(45) Date de publication et mention de la délivrance du brevet: **27.11.2019**
(21) Numéro de dépôt: 15759513.3
(22) Date de dépôt: 23.07.2015
(51) Int. Cl.: B60G 11/16, B60G 15/06

(54) **KIT DE MONTAGE D'UN DISPOSITIF DE SUSPENSION D'UN VEHICULE**
KIT ZUR MONTAGE EINER FAHRZEUGAUFHÄNGUNGSVORRICHTUNG
KIT FOR FITTING A VEHICLE SUSPENSION DEVICE

(30) Priorité: 30.07.2014 FR 1457397
(43) Date de publication de la demande: 07.06.2017
(73) Titulaire: Renault S.A.S., 92100 Boulogne-Billancourt (FR)
(72) Inventeur: PASSIEUX, Arnaud, F-94110 Arcueil (FR)
(86) Numéro de dépôt international: PCT/FR2015/052024
(87) Numéro de publication internationale: WO 2016/016551

(56) Documents cités:
- EP-A2- 0 135 808
- DE-A1-102010 028 290
- FR-A1- 2 973 738
- US-A- 2 026 909
- US-B1- 6 254 072

## Description

L'invention se rapporte à un kit de montage d'un dispositif de suspension d'un véhicule. Plus particulièrement, ce type de kit est conçu pour le montage d'un dispositif de suspension comprenant une coupelle de maintien sur laquelle vient en appui un ressort à spirales.

De tels dispositifs de suspension existent et ont déjà fait l'objet de brevet. On peut, par exemple, citer le brevet FR2973738 qui décrit un dispositif de suspension, dont la principale caractéristique est qu'il comprend un élément de guidage de positionnement d'un ressort sur une coupelle de maintien. Cet élément de guidage comprend une surface de guidage de l'extrémité du ressort et des moyens de fixation amovible audit ressort ou à ladite coupelle. On peut aussi citer la demande US2026909 A montrant également un ressort de suspension.

Pour des problématiques de tirage sous couple, il arrive que certains ressorts soient montés sur ladite coupelle de maintien dans le sens horaire, et que d'autres ressorts soient montés dans le sens antihoraire. Ces deux types de configuration nécessitent alors l'utilisation de deux coupelles différentes, et donc de deux outillages spécifiques, adaptés à la coupelle considérée. Il en résulte ainsi une multiplication des pièces par deux, et donc des surcoûts significatifs.

Un kit de montage d'un dispositif de suspension selon l'invention, permet de monter un ressort à spirales sur une coupelle de suspension, aussi bien dans le sens horaire que dans le sens antihoraire, en s'affranchissant des inconvénients relevés dans l'état de la technique.

L'invention a pour objet un kit de montage d'un dispositif de suspension à ressort d'un véhicule.

La principale caractéristique d'un dispositif de suspension selon l'invention, est qu'il comprend une coupelle de maintien destinée à servir de base d'appui audit ressort, une première pièce de guidage pour le montage du ressort dans le sens horaire et une deuxième pièce de guidage pour le montage dudit ressort dans le sens antihoraire, ladite coupelle possédant une surface de réception apte à recevoir l'une ou l'autre desdites deux pièces de guidage en fonction du sens de montage choisi. De cette manière, il suffit de placer directement sur une coupelle commune, la pièce de guidage adaptée pour obtenir le montage du ressort, soit dans le sens horaire soit dans le sens antihoraire. Chaque pièce de guidage est destinée à réceptionner une extrémité du ressort. La surface de réception de la coupelle peut, par exemple, être constituée d'une multiplicité de reliefs adaptés pour recevoir l'une ou l'autre des pièces de guidage. Avantageusement, au moins une partie de ces reliefs est commune pour les deux pièces. Les pièces de montage peuvent être, soit juste posées sur la coupelle, soit fixées à ladite coupelle par vissage ou clippage. Préférentiellement, la coupelle est de forme circulaire. Les deux pièces ont les mêmes caractéristiques structurelles et dimensionnelles, mais se déduisent l'une de l'autre par symétrie.

De façon préférentielle, chaque pièce de guidage est fixée à la coupelle par clippage. Ce mode de fixation accroit la souplesse d'utilisation d'un kit de montage selon l'invention en permettant un montage/démontage rapide de la pièce de guidage, sans l'utilisation d'un outillage spécifique.

Avantageusement, la surface de réception comprend trois évidements périphériques, chacune des pièces de guidage présentant trois pattes de positionnement destinées à venir se placer dans lesdits évidements. De façon avantageuse, au moins deux des trois pattes sont de forme triangulaire.

Préférentiellement, chacune des pièces de guidage a une forme en arc-de-cercle et présente deux extrémités, une patte de positionnement étant située au niveau de chacune desdites extrémités. Autrement dit, chaque pièce de guidage est de forme annulaire non fermée, et présente donc deux extrémités le long de cet arc-de-cercle. Avantageusement, la pièce en arc-de-cercle s'étend sur un secteur angulaire supérieur à 180°.

De façon avantageuse, les trois pattes de positionnement d'une pièce de guidage saillent vers l'extérieur de ladite pièce. Autrement dit, lesdites pattes saillent vers l'extérieur de la courbure de la pièce de guidage et ont tendance à accroitre les dimensions de chacune des pièces de guidage.

Avantageusement, une extrémité de chaque pièce de guidage dispose d'une butée d'arrêt contre laquelle est destinée à venir en appui une extrémité du ressort, chacune desdites deux pièces possédant deux rampes de guidage incurvées et destinées à venir au contact d'une portion d'une première spire dudit ressort. Chaque pièce de guidage, une fois montée dans la coupelle, agit comme une butée anti-rotation pour le ressort. Les deux rampes de guidage permettent d'accroître les conditions de contact entre le ressort et la pièce de guidage afin notamment de stabiliser la position dudit ressort. La courbure de chaque rampe de guidage suit celle de la pièce de guidage en arc-de-cercle. La première spire du ressort se termine par l'extrémité dudit ressort venant en appui contre la butée.

De façon préférentielle, pour la première pièce de guidage la position de chacune des rampes se déduit de la position de la butée par une rotation dans le sens horaire, et pour la deuxième pièce de guidage la position de chacune des rampes se déduit de la position de la butée par une rotation dans le sens antihoraire. Pour appliquer fictivement ces rotations, il est supposé que celles-ci s'effectuent par rapport à un axe passant par le centre de la pièce de guidage.

Préférentiellement, les deux pièces de guidage sont réalisées en caoutchouc.

L'invention a pour deuxième objet un véhicule automobile comprenant au moins un dispositif de suspension à ressort.

La principale caractéristique d'un véhicule selon l'invention est que chaque dispositif de suspension comprend la coupelle et une pièce de guidage du kit de montage selon l'invention.

Un kit de montage selon l'invention présente l'avantage de pouvoir monter un dispositif de suspension de façon simple et rapide, grâce à la fixation par clippage d'une pièce de guidage à la coupelle, ne nécessitant ni une manipulation compliquée, ni l'utilisation d'un outillage spécifique.

On donne ci-après une description détaillée d'un mode de réalisation préféré d'un kit de montage d'un dispositif de suspension selon l'invention, en se référant aux figures 1 à 4.
- La figure 1 est une vue en perspective d'une coupelle de maintien d'un kit de montage selon l'invention,
- La figure 2A est une vue en perspective d'une première pièce de guidage d'un kit de montage selon l'invention,
- La figure 2B est une vue en perspective d'une deuxième pièce de guidage d'un kit de montage selon l'invention,
- La figure 3 est une vue en perspective partielle d'un dispositif de suspension selon l'invention,
- La figure 4 est une vue partielle du dessus d'un dispositif de suspension selon l'invention.

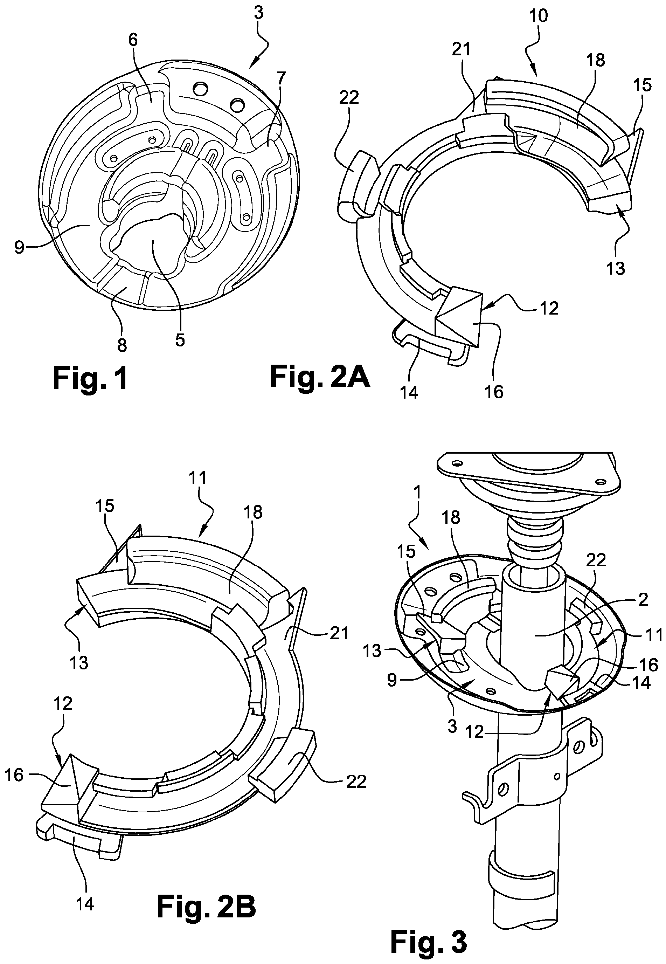

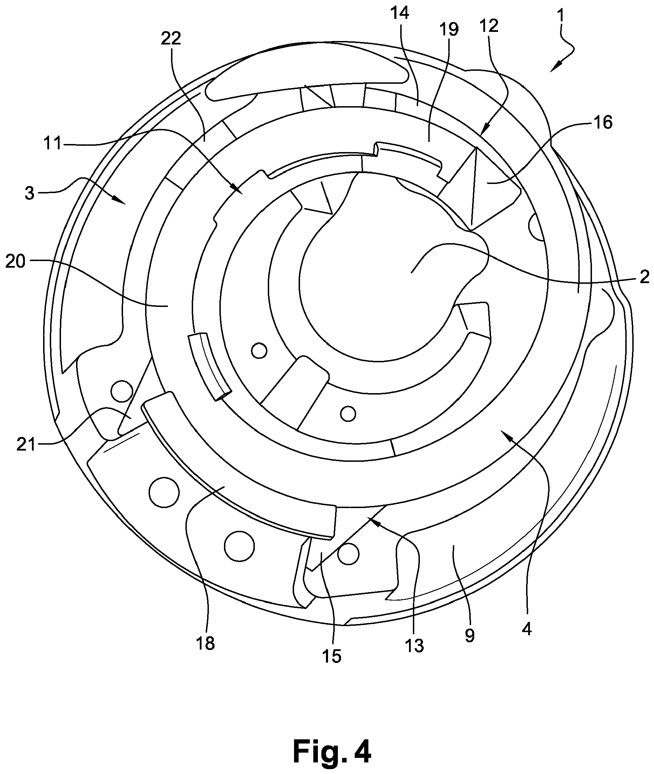

En se référant aux figures 3 et 4, un dispositif de suspension d'un véhicule automobile, comprend un tube 2 sur lequel est fixée une coupelle 3 destinée à maintenir un ressort 4 à spirales, placé autour dudit tube 2.

En se référant à la figure 1, un kit de montage selon l'invention comprend une coupelle 3 de maintien sous la forme d'une pièce de faible épaisseur, ayant une forme sensiblement circulaire et étant dotée d'une ouverture 5 destinée au passage dudit tube 2. Cette coupelle 3 présente trois évidement 6, 7, 8 périphériques de forme sensiblement trapézoïdale, chacun desdits évidements 6, 7, 8 possédant un bord aligné sur le bord périphérique de ladite coupelle 3. Un premier 6 et un deuxième évidement 7 sont proches l'un de l'autre en faisant entre eux un angle inférieur à 120°, le troisième évidement 8 étant éloigné dudit premier 6 et dudit deuxième évidement 7 en faisant avec chacun d'entre eux, un angle supérieur à 120°. Le troisième évidement 8 est disposé de façon symétrique par rapport au premier 6 et au deuxième évidement 7, en étant situé sur l'axe reliant le centre de la coupelle 3 et le milieu de la distance séparant le premier 6 et le deuxième évidement 7. La coupelle 3 possède une surface 9 de réception, et chaque évidement 6, 7, 8 constitue un creux à fond plat, pratiqué dans ladite surface de réception 9.

En se référant à la figure 2A, un kit de montage selon l'invention comprend une première pièce de guidage 10 sous la forme d'une pièce en arc-de-cercle ayant une première 12 et une deuxième 13 extrémités, ladite pièce 10 s'étendant sur un secteur angulaire supérieur à 180°. Autrement dit, l'ouverture angulaire définie par les deux droites joignant le centre de la pièce 10 et chacune desdites extrémités 12, 13 est supérieure à 180° au niveau de ladite pièce 10. Cette pièce 10 est délimitée sur sa longueur par un bord extérieur et un bord intérieur incurvés. Chacune desdites extrémités 12, 13 possède une patte de positionnement 14, 15 plate et de faible épaisseur, s'étendant vers l'extérieur de ladite pièce 10. Une troisième patte de positionnement 21 est placée entre les deux pattes 14, 15 des deux extrémités 12, 13 de la pièce 10 en étant plus proche de la patte 15 de la deuxième extrémité 13 que de la patte 14 de la première extrémité 12. La troisième patte de positionnement 21 et la patte de positionnement 15 de la deuxième extrémité 13 ont chacune une forme triangulaire. La première extrémité 12 est matérialisée par une protubérance 16 terminale. En léger retrait de la deuxième extrémité 13, est implantée une première rampe de guidage 18 surélevée, s'étendant le long de la pièce 10 vers la première extrémité 12, et adoptant la courbure générale de ladite pièce 10. Ladite première pièce 10 comprend une deuxième rampe de guidage 22 située approximativement entre la protubérance 16 et la première rampe de guidage 18, ladite deuxième rampe 22 adoptant également la courbure générale de ladite pièce 10. Les deux rampes 18, 22 sont alignées suivant le bord extérieur de la pièce de guidage 10. La pièce de guidage 10 possède entre ses deux extrémités 12, 13 et alignés le long du bord intérieur, trois clips 17 de fixation régulièrement espacés et surélevés dans le même sens que les rampes 18, 22 de guidage. De cette manière, les deux rampes de guidages 18, 22 et les trois clips 17 définissent un couloir annulaire sur la pièce de guidage 10. Pour cette première pièce 10, la position des deux rampes de guidage 18, 22 se déduit de la position de la protubérance 16 par une rotation dans le sens horaire.

En se référant à la figure 2B, un kit de montage selon l'invention, comprend une deuxième pièce 11 de guidage possédant les mêmes caractéristiques structurelles et géométriques que celles de la première pièce 10 de guidage ci-avant décrite, seule la courbure générale de ladite pièce 11 entre la première 12 et la deuxième extrémité 13 a été inversée. Autrement dit, la deuxième pièce 11 de guidage se déduit de la première pièce 10 de guidage, par une symétrie par rapport à un plan joignant les deux extrémités 12, 13 de la première pièce 10, et qui serait perpendiculaire au plan dans lequel s'inscrit ladite première pièce 10. Pour cette deuxième pièce 11, la position des deux rampes de guidage 18, 22 se déduit de la position de la protubérance 16 par une rotation dans le sens antihoraire.

En se référant à la figure 3, suivant la configuration souhaitée pour le ressort 4, soit la première pièce de guidage 10 est insérée dans la surface de réception 9 de la coupelle 3 pour un montage dudit ressort 4 dans le sens horaire, soit la deuxième pièce de guidage 11 est insérée dans ladite surface de réception 9 de la coupelle 3 pour un montage dudit ressort 4 dans le sens antihoraire. La coupelle 3 est conçue pour recevoir indifféremment la première 10 ou la deuxième 11 pièce de guidage, sans procéder à une quelconque modification ou à un quelconque réaménagement de ladite coupelle 3.

Ainsi, en se référant aux figures 1, 2A et 2B, la première pièce de guidage 10 ou la deuxième pièce de guidage 11 est insérée dans la surface de réception 9 de la coupelle 3 par clippage, de sorte que les trois pattes 14, 15, 21 de positionnement soient placées dans les trois évidements 6, 7, 8 de ladite pièce de guidage 10, 11.

En se référant à la figure 4, lorsque la première 10 ou la deuxième pièce 11 de guidage est insérée dans la surface de réception 9 de la coupelle 3 par clippage, une extrémité 19 du ressort 4 vient en appui contre la protubérance 16 de ladite pièce 10, 11, qui sert de butée d'arrêt pour ledit ressort 4. La première spire 20 dudit ressort 4 vient alors se placer dans le couloir annulaire de la pièce de guidage 10, 11, qui est défini par les deux rampes de guidage 18, 22 et les trois clips 17. La protubérance 16, les trois clips 17 et les deux rampes de guidage 18, 22 concourent à la stabilité de montage du ressort 4 sur la coupelle 3, autour du tube 2.

## Revendications

1. Kit de montage d'un dispositif de suspension (1) à ressort (4) d'un véhicule, **caractérisé en ce qu'**il comprend une coupelle (3) de maintien destinée à servir de base d'appui audit ressort (4), une première pièce (10) de guidage pour le montage du ressort (4) dans le sens horaire et une deuxième pièce (11) de guidage pour le montage dudit ressort (4) dans le sens antihoraire, et **en ce que** ladite coupelle (3) possède une surface de réception (9) commune apte à recevoir l'une ou l'autre desdites deux pièces (10, 11) de guidage en fonction du sens de montage choisi.

2. Kit de montage selon la revendication 1, **caractérisé en ce que** chaque pièce de guidage (10, 11) est fixée à la coupelle (3) par clippage.

3. Kit de montage selon l'une quelconque des revendications 1 ou 2, **caractérisé en ce que** la surface de réception (9) comprend trois évidements périphériques (6, 7, 8), et **en ce que** chacune des pièces (10, 11) de guidage présente trois pattes (14, 15, 21) de positionnement destinées à venir se placer dans lesdits évidements (6, 7, 8).

4. Kit de montage selon la revendication 3, **caractérisé en ce que** chacune des pièces de guidage (10, 11) a une forme en arc-de-cercle et présente deux extrémités (12, 13), et **en ce qu'**une patte (14, 15) de positionnement est située au niveau de chacune desdites extrémités (12, 13).

5. Kit de montage selon la revendication 4, **caractérisé en ce que** les trois pattes (14, 15, 21) de positionnement d'une pièce de guidage (10, 11) saillent vers l'extérieur de ladite pièce (10, 11).

6. Kit de montage selon l'une quelconque des revendications 4 ou 5, **caractérisé en ce qu'**une extrémité (12) de chaque pièce de guidage (10, 11) dispose d'une butée d'arrêt (16) contre laquelle est destinée à venir en appui une extrémité (19) du ressort (4), et **en ce que** chacune desdites deux pièces (10, 11) possède deux rampes de guidage (18, 22) incurvées et destinées à venir au contact d'une portion d'une première spire (20) dudit ressort (4).

7. Kit de montage selon la revendication 6, **caractérisé en ce que** pour la première pièce de guidage (10) la position de chacune des rampes (18, 22) se déduit de la position de la butée (16) par une rotation dans le sens horaire, et **en ce que** pour la deuxième pièce de guidage (11) la position de chacune des rampes (18, 22) se déduit de la position de la butée (16) par une rotation dans le sens antihoraire.

8. Kit de montage selon l'une quelconque des revendications 1 à 7, **caractérisé en ce que** les deux pièces de guidage (10, 11) sont réalisées en caoutchouc.

9. Véhicule automobile comprenant au moins un dispositif de suspension (1) à ressort (4), **caractérisé en ce que** chaque dispositif de suspension (1) comprend la coupelle (3) et une pièce de guidage (10, 11) d'un kit de montage selon l'une quelconque des revendications 1 à 8.

## Patentansprüche

1. Kit zur Montage einer Aufhängungsvorrichtung (1) mit Feder (4) eines Fahrzeugs, **dadurch gekennzeichnet, dass** es einen Halteteller (3), welcher dafür vorgesehen ist, der Feder (4) als Stützbasis zu dienen, ein erstes Führungsteil (10) für die Montage der Feder (4) im Uhrzeigersinn und ein zweites Führungsteil (11) für die Montage der Feder (4) gegen den Uhrzeigersinn aufweist, und dass der Teller (3) eine gemeinsame Aufnahmefläche (9) besitzt, welche dafür geeignet ist, um das eine oder das andere der beiden Führungsteile (10, 11) in Abhängigkeit von der gewählten Montagerichtung aufzunehmen.

2. Montagesatz nach Anspruch 1, **dadurch gekennzeichnet, dass** jedes Führungsteil (10, 11) durch Einrasten an dem Teller (3) befestigt ist.

3. Montagesatz nach einem der Ansprüche 1 oder 2, **dadurch gekennzeichnet, dass** die Aufnahmefläche (9) drei Randausnehmungen (6, 7, 8) aufweist, und dass jedes der Führungsteile (10, 11) drei Positionierungsklauen (14, 15, 21) aufweist, welche dafür vorgesehen sind, um sich in den Ausnehmungen (6, 7, 8) zu platzieren.

4. Montagesatz nach Anspruch 3, **dadurch gekennzeichnet, dass** jedes der Führungsteile (10, 11) eine Kreisbogenform hat und zwei Enden (12, 13) aufweist, und dass auf Höhe von jedem der Enden (12, 13) eine Positionierungsklaue (14, 15) angeordnet ist.

5. Montagesatz nach Anspruch 4, **dadurch gekennzeichnet, dass** die drei Positionierungsklauen (14, 15, 21) eines Führungselements (10, 11) in Richtung auf den Außenbereich des Teils (10, 11) vorstehen.

6. Montagesatz nach einem der Ansprüche 4 oder 5, **dadurch gekennzeichnet, dass** ein Ende (12) von jedem Führungsteil (10, 11) über einen Arretieranschlag (16) verfügt, an welchem ein Ende (19) der Feder (4) vorgesehen ist, sich abzustützen, und dass jedes der beiden Teile (10, 11) zwei Führungsrampen (18, 22) besitzt, welche gekrümmt und dafür vorgesehen sind, um mit einem Abschnitt einer ersten Windung (20) der Feder (4) in Kontakt zu kommen.

7. Montagesatz nach Anspruch 6, **dadurch gekennzeichnet, dass** sich für das erste Führungsteil (10) die Position von jeder der Rampen (18, 22) von der Position des Anschlags (16) durch eine Drehung im Uhrzeigersinn ableitet und dass sich für das zweite Führungsteil (11) die Position von jeder der Rampen (18, 22) durch eine Drehung im Gegenuhrzeigersinn von der Position des Anschlags (16) ableitet.

8. Montagesatz nach einem der Ansprüche 1 bis 7, **dadurch gekennzeichnet, dass** die beiden Führungsteile (10, 11) aus Kautschuk ausgeführt sind.

9. Kraftfahrzeug, aufweisend mindestens eine Aufhängungsvorrichtung (1) mit Feder (4), **dadurch gekennzeichnet, dass** jede Aufhängungsvorrichtung (1) den Teller (3) und ein Führungsteil (10, 11) eines Montagekits nach einem der Ansprüche 1 bis 8 aufweist.

## Claims

1. Kit for fitting a spring (4) suspension device (1) of a vehicle, **characterized in that** it comprises a retaining cup (3) intended to act as a support base for said spring (4), a first guide piece (10) for fitting the spring (4) in the clockwise direction and a second guide piece (11) for fitting said spring (4) in the counterclockwise direction, and **in that** said cup (3) has a common receiving surface (9) suitable for receiving one or the other of said two guide pieces (10, 11) depending on the direction of fitting chosen.

2. Fitting kit according to Claim 1, **characterized in that** each guide piece (10, 11) is secured to the cup (3) by clip-fastening.

3. Fitting kit according to either one of Claims 1 and 2, **characterized in that** the receiving surface (9) comprises three peripheral recesses (6, 7, 8), and **in that** each of the guide pieces (10, 11) has three positioning lugs (14, 15, 21) intended to be positioned in said recesses (6, 7, 8).

4. Fitting kit according to Claim 3, **characterized in that** each of the guide pieces (10, 11) is in the shape of a circular arc and has two ends (12, 13), and **in that** one positioning lug (14, 15) is located at each of said ends (12, 13).

5. Fitting kit according to Claim 4, **characterized in that** the three positioning lugs (14, 15, 21) of a guide piece (10, 11) project outwards from said piece (10, 11).

6. Fitting kit according to either one of Claims 4 and 5, **characterized in that** one end (12) of each guide piece (10, 11) is provided with an end stop (16) against which one end (19) of the spring (4) is intended to rest, and **in that** each of said two pieces (10, 11) has two curved guide ramps (18, 22) intended to come into contact with a portion of a first turn (20) of said spring (4).

7. Fitting kit according to Claim 6, **characterized in that**, for the first guide piece (10), the position of each of the ramps (18, 22) is deduced from the position of the stop (16) by rotation in the clockwise direction, and **in that**, for the second guide piece (11), the position of each of the ramps (18, 22) is deduced from the position of the stop (16) by rotation in the counterclockwise direction.

8. Fitting kit according to any one of Claims 1 to 7, **characterized in that** the two guide pieces (10, 11) are made from rubber.

9. Motor vehicle comprising at least one spring (4) suspension device (1), **characterized in that** each suspension device (1) comprises the cup (3) and a guide piece (10, 11) of a fitting kit according to any one of Claims 1 to 8.
